# EUROPEAN PATENT SPECIFICATION

(11) **EP 3 240 979 B1**
(45) Date of publication and mention of the grant of the patent: **04.11.2020**
(21) Application number: 15875836.7
(22) Date of filing: 11.06.2015
(51) Int. Cl.: F25B 1/00, F25B 29/00, B60P 3/20, B65D 88/74, B60H 3/00, A23B 7/148

(54) **METHOD FOR CONTROLLING, TRANSPORT UNIT**
STEUERUNGSVERFAHREN, TRANSPORTEINHEIT
PROCÉDÉ DE COMMANDE, UNITÉ DE TRANSPORT

(30) Priority: 31.12.2014 US 201462098487 P
(43) Date of publication of application: 08.11.2017
(73) Proprietor: Thermo King Corporation, Minneapolis, MN 55420 (US)
(72) Inventor: ZITA, Jiri, 61400 Brno (CZ); FOREJT, Lubos, 25301 Statenice Praha-zapad (CZ); STAVOVA, Petra, 16000 Prague (CZ); VOJIK, Martin, 14300 Praha (CZ)
(74) Representative: Haseltine Lake Kempner LLP
(86) International application number: PCT/US2015/035372
(87) International publication number: WO 2016/108951

(56) References cited:
- WO-A1-01/83317
- WO-A1-96/12645
- WO-A1-2004/107868
- WO-A1-2014/066952
- US-A- 4 399 658
- US-A- 5 125 237
- US-A- 5 457 963
- US-A- 5 715 685
- US-B2- 7 089 751

## Description

### FIELD

This disclosure relates generally to a method for controlling an atmospheric gas in a transport refrigeration system (TRS) and a transport unit.

### BACKGROUND

A controlled atmosphere system (CAS) is generally used to control an atmospheric parameter such as, but not limited to, a nitrogen content, an oxygen content, and/or a carbon dioxide content within a storage space such as, but not limited to, a transport unit. Examples of a transport unit include, but are not limited to, a container on a flat car, an intermodal container, a truck, a boxcar, or other similar transport unit. A transport unit is commonly used to transport perishable cargo such as, but not limited to, produce, frozen foods, and/or meat products. By controlling one or more atmospheric parameters within the transport unit, the rate of, for example, ripening of perishable cargo stored in the transport unit can be reduced.

US5457963A discloses a method for controlling operation of a system for controlling the atmosphere within a confined space. The system is configured to control the flow of air to achieve setpoint oxygen and carbon dioxide levels in the atmosphere.

WO2014/066952A1 discloses a method of controlling gas composition within a container containing respiring produce, by introducing gases from outside the container into the container.

WO2004/107868A1 discloses an apparatus for controlling the composition of gases within a cargo container including a gas permeable membrane to facilitate the passage of gas molecules at different rates.

WO01/83317A1 discloses an apparatus and method for adjusting the atmosphere within a partially sealed chamber containing respiring produce, with the chamber having openings to permit ambient atmosphere to enter.

### SUMMARY

This disclosure relates generally to a method for controlling an atmospheric gas in a transport refrigeration system (TRS) and a transport unit.

A method for controlling a carbon dioxide concentration within an interior space of a transport unit according to claim 1 is disclosed. The method includes determining the carbon dioxide concentration within the interior space; enabling a carbon dioxide injection system when the carbon dioxide concentration is not at a set point value; disabling the carbon dioxide injection system when the carbon dioxide concentration is at the set point value; and ventilating the interior space to decrease the carbon dioxide concentration by enabling a controlled atmosphere system when the carbon dioxide concentration is greater than a threshold range based on the set point value, the controlled atmosphere system including a nitrogen separation membrane, wherein the ventilating includes bypassing the nitrogen separation membrane thereby increasing a concentration of oxygen in the interior space of the transport unit.

A transport unit according to claim 6 is disclosed. The transport unit includes a transport refrigeration unit; an interior space; and a carbon dioxide injection system for controlling a carbon dioxide concentration within the interior space of the transport unit during transport. The carbon dioxide injection system includes a carbon dioxide source including a controlled atmosphere system, the controlled atmosphere system including a nitrogen separation membrane and a bypass line; a pressure control device; and a flow control device. The carbon dioxide source, the pressure control device, and the flow control device are fluidly connected and in fluid communication with the interior space of the transport unit. The carbon dioxide injection system also includes a controller configured to selectively enable and/or disable flow from the carbon dioxide source to the interior space of the transport unit. The controller is configured to ventilate the interior space to decrease a carbon dioxide concentration by enabling the controlled atmosphere system when the carbon dioxide concentration is greater than a threshold range based on a set point value, including enabling flow to the bypass line and bypassing the nitrogen separation membrane, thereby increasing a concentration of oxygen in the interior space of the transport unit.

### BRIEF DESCRIPTION OF THE DRAWINGS

References are made to the accompanying drawings that form a part of this disclosure.
Fig. 1 illustrates a transport unit with which the embodiments described in this specification can be practiced, according to some embodiments.
Fig. 2 illustrates a block diagram of a carbon dioxide injection system used in a transport unit, according to some embodiments.
Fig. 3 illustrates a block diagram of a controlled atmosphere system (CAS) for use as a carbon dioxide source in a carbon dioxide injection system, according to some embodiments.
Fig. 4 illustrates a flowchart for a method to control a carbon dioxide concentration within a transport unit, according to some embodiments.

Like reference numbers represent like parts throughout.

### DETAILED DESCRIPTION

This disclosure relates generally to a method for controlling an atmospheric gas in a transport refrigeration system (TRS) and a transport unit.

Perishable goods, such as fruits and vegetables, can consume oxygen and produce carbon dioxide (e.g., due to a ripening effect of the perishable goods) when being stored or during transportation. The ripening effect can reduce shelf life of the perishable goods. To help prolong the shelf life of perishable goods, atmosphere in an interior space of, for example, a transport unit can be controlled. During the transportation, the ripening effect of the perishable goods can continuously cause the concentrations of oxygen and/or carbon dioxide in the atmosphere of the interior space to change, which can cause undesirable effects on the shelf life of the perishable goods. It may be desired to control the atmosphere in the storage space during the transportation and/or storage of the perishable goods.

A "controlled atmosphere system" (CAS) includes, for example, a controlled atmosphere circuit for controlling one or more atmospheric parameters within an interior space of a transport unit. Examples of atmospheric parameters within the interior space include, but are not limited to, a content of nitrogen, a content of oxygen, and/or a content of carbon dioxide in the air contained within the interior space.

A "transport refrigeration system" (TRS) includes, for example, a refrigeration circuit for controlling the refrigeration of an interior space of a transport unit. The TRS may be a vapor-compression type refrigeration system, or any other suitable refrigeration system that can use refrigerant, cold plate technology, or the like.

A "transport unit" includes, for example, a container (e.g., a container on a flat car, an intermodal container, etc.), a truck, a boxcar, or other similar transport unit.

A "CAS controller" includes, for example, an electronic device (e.g., a processor, memory, etc.) that is configured to manage, command, direct, and regulate the behavior of one or more components of a CAS (e.g., an air compressor, one or more flow valves, one or more sensors, one or more switches, etc.). In some embodiments, the CAS controller can be part of a controller configured to manage, command, direct, and regulate the behavior of one or more components of a refrigeration circuit (e.g., an evaporator, a condenser, a compressor, an expansion valve (EXV), an electronic throttling valve (ETV), etc.), one or more components of an power unit powering, for example, the CAS and a refrigeration circuit, etc.

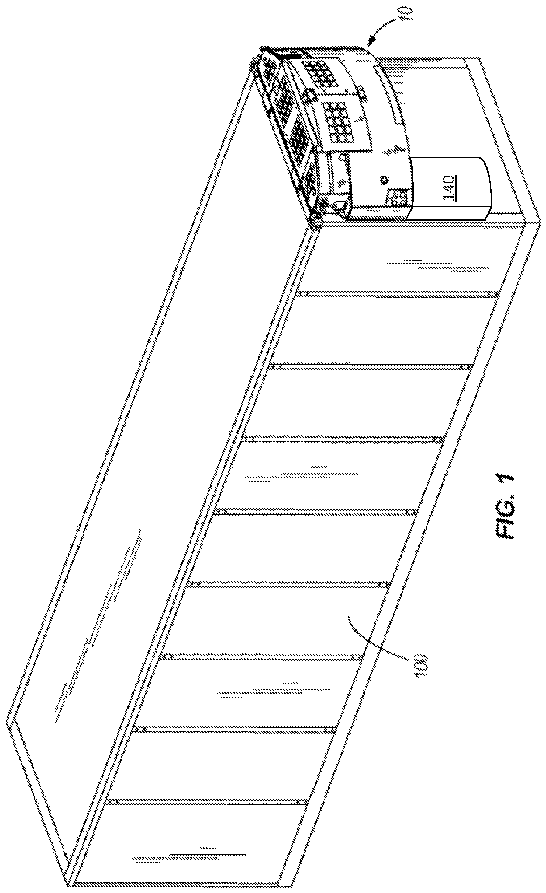

Fig. 1 illustrates a transport unit 100 with which the embodiments described in this specification can be practiced, according to some embodiments. The transport unit 1 00 includes a transport refrigeration unit (TRU) 10 and a carbon dioxide injection system 140. It is to be appreciated that the transport unit 100 can include one or more additional components. It is further to be appreciated that the carbon dioxide injection system 140 can be incorporated within the TRU 10, according to some embodiments. In other embodiments, the carbon dioxide injection system 140 can be incorporated within an interior space of the transport unit 100.

The TRU 10 can generally be used to control one or more environmental conditions within the interior space of the transport unit 1 00. Examples of the one or more environmental conditions include, but are not limited to, temperature, air quality, humidity, or the like. The TRU 10 generally operates according to principles known in the art.

It is to be appreciated that the transport unit 100 can be a variety of other types of transport units other than a container as illustrated. Examples of alternative transport units include, but are not limited to, a trailer, a boxcar, a truck with a cargo space, or other similar storage compartment designed for transporting cargo. The type of the transport unit 100 is not intended to be limiting, though it is to be appreciated that the systems and methods described in this specification may have varying levels of efficacy depending upon the type of the transport unit 1 00.

The carbon dioxide injection system 140 can be configured to control one or more atmospheric parameters (e.g., an oxygen content, a carbon dioxide content, a nitrogen content, content of other gases (e.g., ethylene, ozone, etc.), or the like) within the interior space of the transport unit 100. In particular, the carbon dioxide injection system 140 can be configured to add carbon dioxide to the atmosphere of the interior space in the transport unit 100. In some embodiments, the carbon dioxide injection system 140 can also be configured to separate nitrogen from, for example, ambient air and supply nitrogen to the interior space of the transport unit 100. In some embodiments, the carbon dioxide injection system 140 is configured for controlling the carbon dioxide concentration within the interior space of the transport unit 100 while the transport unit 100 is in transit. In some embodiments, the carbon dioxide injection system 140 is configured for controlling the carbon dioxide concentration within the interior space of the transport unit 100 while the transport unit 100 is not in transit (e.g., while at a storage facility, etc.).

The TRU 10 and the carbon dioxide injection system 140 can be configured to work together in order to provide a desired atmospheric condition for the interior space that is suitable, for example, for transporting perishable goods such as, but not limited to, fruits and vegetables.

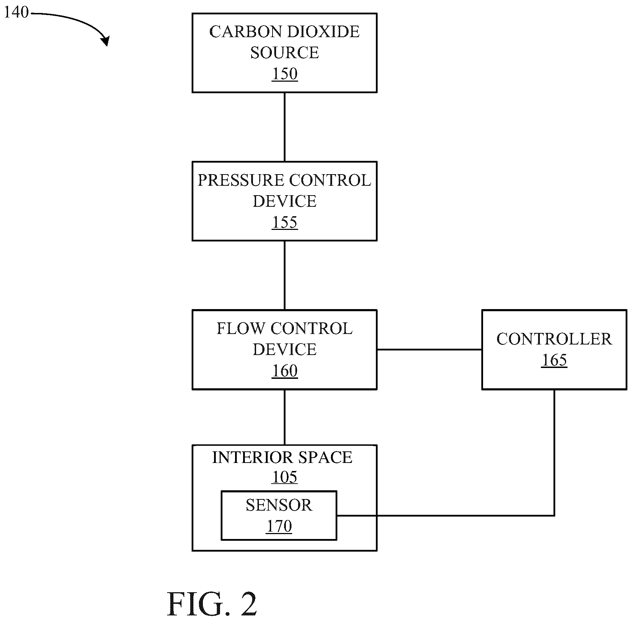

Fig. 2 illustrates a block diagram of the carbon dioxide injection system 140 (Fig. 1), according to some embodiments. The carbon dioxide injection system 140 generally includes a carbon dioxide source 150, a pressure control device 155, a flow control device 160, a controller 165, and a sensor 170 (e.g., a carbon dioxide concentration sensor or the like that is disposed within an interior space 105 of the transport unit 100).

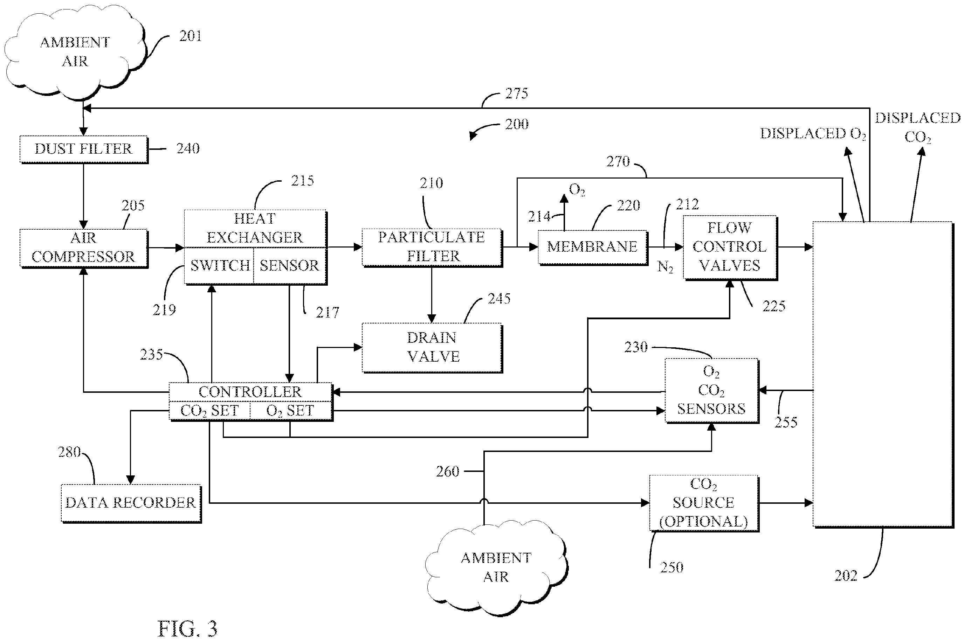

The carbon dioxide source 150 can be any means for supplying carbon dioxide gas to the interior space of the transport unit 100. In some embodiments, the carbon dioxide source 150 can be a pressurized cylinder including carbon dioxide. In some embodiments, the pressurized cylinder can have a volume between about 10 and about 100 liters. In some embodiments, the pressurized cylinder including carbon dioxide can be stored at about 50 bar. In some embodiments the carbon dioxide 150 can be placed inside the interior space of the transport unit 100. In other embodiments, the carbon dioxide source 150 can be placed outside the interior space of the transport unit 100. In some embodiments, the carbon dioxide source 150 can be a high pressure storage container having a volume between about 30 and about 200 liters. In some embodiments, the high-pressure storage container can store the carbon dioxide at about 50 bar and can be placed either in the interior space or outside the interior space of the transport unit 100. In some embodiments, the carbon dioxide source 150 includes a controlled atmosphere system (CAS) such as CAS 200 shown and described in accordance with Fig. 3 below. It is to be appreciated that the carbon dioxide source 150 is not intended to be limited to the above-described embodiments and that other carbon dioxide sources may be implemented within the scope of this disclosure. It is to be appreciated that this volume range is intended to be exemplary and that the volume of the carbon dioxide source 150 can vary depending upon the embodiment. Further, the pressures are intended to be exemplary and can vary according to the principles described herein.

The pressure control device 155 is generally configured to reduce a pressure of the carbon dioxide coming from the carbon dioxide source 155. As described above, the carbon dioxide source 150 can include carbon dioxide stored under pressure. The pressure control device 155 can reduce the pressure of the carbon dioxide. In some embodiments, the carbon dioxide can be reduced from a pressure of about 50 bar to a pressure of about 2 bar. In some embodiments, the pressure can be reduced to about atmospheric pressure. The pressure reduction can, for example, be based on a safety requirement. In some embodiments, the pressure reduction can be selected such that the pressure control device 155 does not freeze due to the reduction in pressure. The pressure control device 155 generally functions according to principles known in the art.

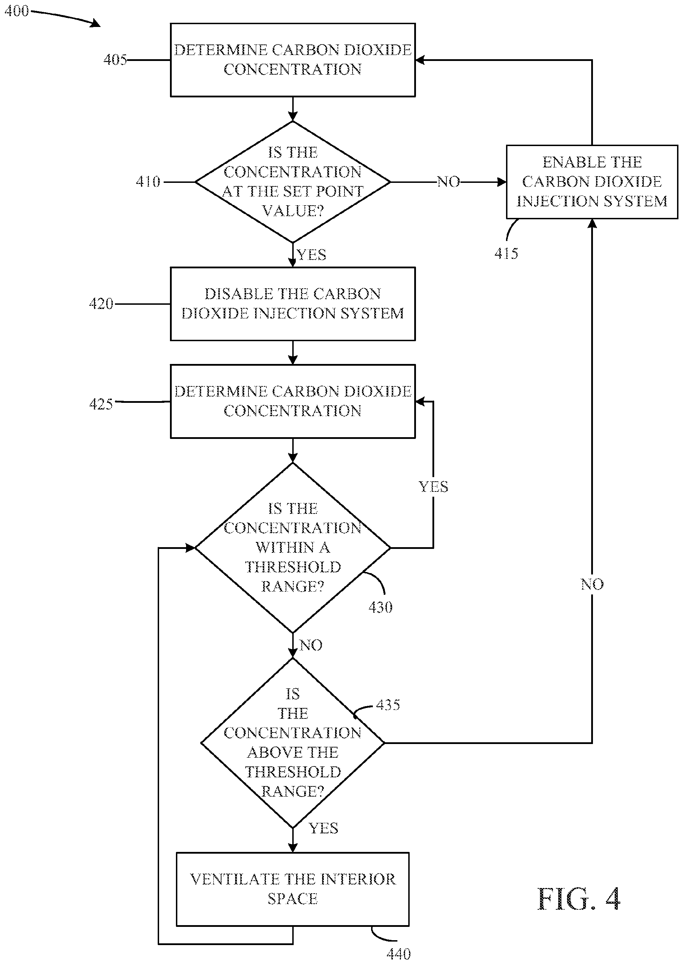

The flow control device 160 can generally be configured to allow flow of the carbon dioxide to the interior space of the transport unit 1 00 or the prevent flow of the carbon dioxide to the interior space of the transport unit 100. In some embodiments, the flow control device 160 can be a solenoid valve having a flow enabled position and a flow disabled position. In some embodiments, the flow control device 160 can include a valve having a flow-enabled position, a flow disabled position, and one or more intermediate positions in which a partial flow of carbon dioxide is enabled. The flow control device 160 generally operates according to principles known in the art. The controller 165 can control the state (e.g., flow enabled, flow disabled, etc.) of the flow control device 160. A method for controlling the state of the flow control device 160 is discussed in additional detail in accordance with Fig. 4 below.

The controller 165 can be, for example, an electronic device that is configured to manage, command, direct, and regulate the behavior of one or more components (e.g., the flow control device 160, etc.) of the carbon dioxide injection system 140. The controller 165 controls the carbon dioxide injection system 140 to obtain an environmental condition (e.g., a concentration of carbon dioxide) in the interior space of the transport unit 100. The controller 165 can be in communication with the flow control device 160 and the sensor 170. The controller 165 can be powered by, for example, a battery (not shown).

The sensor 170 is disposed within the interior space of the transport unit 100. In some embodiments, the sensor 170 can be a carbon dioxide sensor configured to determine a concentration of carbon dioxide within the atmosphere of the interior space of the transport unit 100. The sensor 170 is configured to determine the concentration of carbon dioxide in the interior space of the transport unit 100 and provide the determined carbon dioxide concentration to the controller 165. The controller 165 can use the determined carbon dioxide concentration to control the flow control device 160 (e.g., flow enabled, flow disabled, etc., as discussed in additional detail in accordance with Fig. 4 below).

Fig. 3 illustrates a controlled atmosphere system (CAS) 200 for a carbon dioxide source (e.g., carbon dioxide source 150 of the carbon dioxide injection system 140 in Fig. 2) for a transport unit 202, such as the transport, unit 100 shown in Fig. 1.

The basic components of the CAS 200 include an air compressor 205, a particulate filter 210, a heat exchanger 215, a nitrogen separation membrane 220, a system of metering valves 225, a plurality of gas sensors 230, and a CAS controller 235.

The CAS 200 is configured to control the amount of oxygen and carbon dioxide inside the transport unit 202 to change the rate of ripening of cargo (not shown) stored in the transport unit 202. The CAS 200 can control the amount of oxygen (O₂) and carbon dioxide (CO₂) by introducing nitrogen (N₂) generated from the nitrogen separation membrane 220.

When the CAS 200 is running, ambient air 201 from outside the transport unit 202 enters the air compressor 205 through a dust filter 240. In some embodiments, air from inside the transport unit 202 can also be directed to the air compressor 205 through the dust filter 240 via an intake line 275. The atmospheric air is then compressed to a high pressure by the air compressor 205. High pressure air from the particulate filter 210 passes to the heat exchanger 215 where it can be temperature conditioned (e.g., heated or cooled) to an optimum operating temperature. The CAS controller 235 receives temperature data from a heat exchanger temperature sensor 217 and can control operation of a heat exchanger switch 219 to maintain the temperature of compressed air leaving the heat exchanger 215. The high-pressure, temperature conditioned air is then filtered by the particulate filter 210 to remove moisture, dirt, and/or other air contaminants (e.g., oil, ozone, hydrocarbons, etc.) before passing to the membrane 220. In some embodiments, the particulate filter 210 can include a plurality of particulate filters 210. A normally opened drain valve 245 is provided on the particulate filter 210. It will be appreciated that the drain valve 245 can alternatively be a normally closed drain valve. A normally opened drain valve 245 can, for example, allow fluid to drain out in case of a power loss, which can prevent freezing of the particulate filter 210 and/or the drain valve 245. In some embodiments, the drain valve 245 can be an automated drain valve in which the drain valve 245 is adapted to be opened and/or closed when instructed by the CAS controller 235. The CAS controller 235 can be programmed to periodically open the drain valve 245, for a short time, to remove residue which may build up in the particulate filter 210. In some embodiments, the drain valve 245 may not be included if the particulate filter 210 includes an automatic drain.

The temperature conditioned, high pressure air passing from the heat exchanger 215 enters the nitrogen separation membrane 220, where it can be separated into high purity nitrogen, which passes from a nitrogen outlet 212, and oxygen/and other gases which are passed to an oxygen outlet 214. The rate of separation occurring in the nitrogen separation membrane 220 depends on the flow of air through the nitrogen separation membrane 220. This flow rate is controlled by the pressure in the nitrogen outlet 212. The higher the pressure in the nitrogen outlet 212, the higher the nitrogen purity generated, and the lower the flow rate of nitrogen. The nitrogen separation membrane 220 can be capable of generating nitrogen purity levels greater than, for example, about 99 percent. As the pressure in the nitrogen outlet 212 falls, the purity level of the nitrogen falls, and the flow rate increases.

The nitrogen enriched gas passing from the nitrogen separation membrane 220 through the nitrogen outlet 212 passes to the flow control valves 225. The oxygen/other gasses from the oxygen outlet 214 are exhausted to the outside air.

The pressure on the nitrogen outlet 212 of the nitrogen separation membrane 220 is regulated by the aforementioned flow control valves 225. To control the percentage of nitrogen present in the transport unit 202, the CAS controller 235 can be programmed to cycle the flow control valves 225 to increase or decrease the amount/purity of nitrogen in the transport unit 202 as required. The CAS controller 235 may also add carbon dioxide from an external carbon dioxide source 250 if desired.

During a ventilation mode, for example, the temperature conditioned, high pressure air passing from the heat exchanger 215 can bypass the nitrogen separation membrane 220 and pass directly to the transport unit 202 via a bypass line 270. Accordingly, the amount of oxygen in the transport unit 202 can be increased and the amount of carbon dioxide in the transport unit 202 can be decreased.

The gas sensors 230 can include, for example, an oxygen concentration sensor, a carbon dioxide concentration sensor, an ethylene concentration sensor, etc. Periodic calibration of the gas sensors 230 to correct drifts with time and temperature can require sampling outside air via a line 260. The gas sensors 230 can be provided at various locations within the transport unit 202.

The CAS controller 235 is configured to monitor the amount of oxygen and carbon dioxide in the transport unit 202, using the gas sensors 230 via a sample line 255. The oxygen and carbon dioxide concentrations monitored by the CAS controller 235 can be stored in a data recorder 280.

Fig. 4 illustrates a flowchart for a method 400 to control a carbon dioxide concentration within a transport unit (e.g., the transport unit 100 of Fig. 1), according to some embodiments.

The method 400 generally is directed to determining a concentration of carbon dioxide in an atmosphere of an interior space of the transport unit 100 and adding carbon dioxide (e.g., increasing a concentration of carbon dioxide) or ventilating the interior space (e.g., reducing a concentration of carbon dioxide) for the transport unit 100.

The method 400 begins at 405 when a controller (e.g., the controller 165 of Fig. 2) determines a concentration of carbon dioxide in the interior space of the transport unit 100. The controller 165 can determine the concentration of carbon dioxide in the interior space of the transport unit 100 through a sensor (e.g., the sensor 170 of Fig. 2).

At 410 the controller determines whether the carbon dioxide concentration is about the same as a carbon dioxide concentration set point value. The carbon dioxide set point value can vary depending upon a variety of factors. For example, the carbon dioxide set point can vary based on a cargo being transported within the interior space of the transport unit 100, a duration of a trip, a user preference, or the like.

If the carbon dioxide concentration is not at about the set point value in 410, a carbon dioxide injection system (e.g., the carbon dioxide injection system 140 of Figs. 1 - 2) is enabled at 415. Enabling the carbon dioxide injection system 140 can include enabling flow from a carbon dioxide source (e.g., the carbon dioxide source 150 of Fig. 2) by modifying a flow control device (e.g., the flow control device 160 of Fig. 2) such that flow of the carbon dioxide is enabled from the carbon dioxide source 150 to the interior space of the transport unit 100. Once the carbon dioxide injection system 140 is enabled at 415, the method 400 returns to 405 and the controller determines the concentration of carbon dioxide in the interior space of the transport unit 100.

If the carbon dioxide concentration is about the same as the set point value, the carbon dioxide injection system 140 is disabled at 420. In some embodiments, disabling the carbon dioxide injection system 140 can, for example, include modifying the flow control device 160 such that flow of carbon dioxide from the carbon dioxide source 150 to the interior space of the transport unit 100 is prevented.

At 425 the carbon dioxide concentration in the interior space of the transport unit 100 is determined again by the controller 165. At 430, the controller determines whether the carbon dioxide concentration is within a threshold range of the set point value. For example, the threshold range can be an acceptable deviation from the set point value (both above the set point value and below the set point value). In some embodiments, the controller 165 determines the carbon dioxide concentration from the sensor 170 disposed within the interior space of the transport unit 100.

If the carbon dioxide concentration is within the threshold range, the method 400 continues to 425 and monitors the concentration of the carbon dioxide within the interior space of the transport unit 100 until the carbon dioxide concentration is outside the threshold range.

If the carbon dioxide concentration is not within the threshold range, the controller determines whether the carbon dioxide concentration is above the threshold range at 435. If the carbon dioxide concentration is above the threshold range at 435, the controller 165 will ventilate the interior space of the transport unit 1 00 at 440. In some embodiments, ventilating the interior space of the transport unit 100 can be accomplished by enabling a CAS (e.g., the CAS 200 of Fig. 3). The method 400 then continues to 430 to monitor whether the carbon dioxide concentration returns to within the threshold range of the set point value.

If the carbon dioxide concentration is not within the threshold range and the carbon dioxide concentration is not above the threshold range at 435 (e.g., the carbon dioxide concentration in the interior space of the transport unit 100 is below the lower bound of the threshold range of the set point value), the method continues to 415 and enables the carbon dioxide injection system 140.

## Claims

1. A method for controlling a carbon dioxide concentration within an interior space (105) of a transport unit (100), the method comprising:
determining the carbon dioxide concentration within the interior space (105);
enabling a carbon dioxide injection system (140) when the carbon dioxide concentration is not at a set point value;
disabling the carbon dioxide injection system (140) when the carbon dioxide concentration is at the set point value; **characterised by**
ventilating the interior space (105) to decrease the carbon dioxide concentration by enabling a controlled atmosphere system (200) when the carbon dioxide concentration is greater than a threshold range based on the set point value, the controlled atmosphere system (200) including a nitrogen separation membrane (220), wherein the ventilating includes bypassing the nitrogen separation membrane (220) thereby increasing a concentration of oxygen in the interior space of the transport unit (100).

2. The method according to claim 1, wherein determining the carbon dioxide concentration includes determining a sensor (170) reading from a sensor (170) disposed within the interior space (105) of the transport unit (100).

3. The method according to claim 1, wherein enabling the carbon dioxide injection system (140) includes positioning a flow control device (160) such that flow from a carbon dioxide source (150) to the interior space (105) of the transport unit (100) is enabled.

4. The method according to claim 3, wherein disabling the carbon dioxide injection system (140) includes positioning the flow control device (160) such that flow from the carbon dioxide source (150) to the interior space (105) of the transport unit (100) is disabled.

5. The method according to claim 1, further comprising:
enabling the carbon dioxide injection system (140) when the carbon dioxide concentration is lower than a threshold range based on the set point value.

6. A transport unit (100), comprising:
a transport refrigeration unit;
an interior space (105); and
a carbon dioxide injection system (140), the carbon dioxide injection system (140) for controlling a carbon dioxide concentration within the interior space (105) of the transport unit (100) during transport, the system including:
a carbon dioxide source (150) including a controlled atmosphere system (200), the controlled atmosphere system (200) including a nitrogen separation membrane (220);
a pressure control device (155);
a flow control device (160), wherein the carbon dioxide source (150), the pressure control device (155), and the flow control device (160) are fluidly connected and in fluid communication with the interior space (105) of the transport unit (100); and
a controller (165) configured to selectively enable and/or disable flow from the carbon dioxide source (150) to the interior space (105) of the transport unit (100), **characterised in that** the controlled atmosphere system (200) comprises a bypass line (270) and
wherein the controller (165) is configured to ventilate the interior space (105) to decrease a carbon dioxide concentration by enabling the controlled atmosphere system (200) when the carbon dioxide concentration is greater than a threshold range based on a set point value, including enabling flow to the bypass line (270) and bypassing the nitrogen separation membrane (220), thereby increasing a concentration of oxygen in the interior space (105) of the transport unit (100).

7. The transport unit (100) according to claim 6, wherein the interior space (105) of the transport unit (100) includes a sensor (170) configured to determine a carbon dioxide concentration within the interior space (105).

8. The transport unit (100) according to claim 6, wherein the transport unit (100) is one of a container on a flat car, an intermodal container, a truck, or a boxcar.

## Patentansprüche

1. Verfahren zum Steuern einer Kohlendioxidkonzentration in einem Innenraum (105) einer Transporteinheit (100), wobei das Verfahren umfasst:
Bestimmen der Kohlendioxidkonzentration im Innenraum (105);
Aktivieren eines Kohlendioxidinjektionssystems (140), wenn die Kohlendioxidkonzentration nicht auf einem Sollwert liegt;
Deaktivieren des Kohlendioxidinjektionssystems (140), wenn die Kohlendioxidkonzentration auf dem Sollwert liegt; **gekennzeichnet durch**
Belüften des Innenraums (105) zum Verringern der Kohlendioxidkonzentration durch Aktivieren eines Systems (200) mit geregelter Atmosphäre, wenn die Kohlendioxidkonzentration größer als ein auf dem Sollwert basierender Schwellenbereich ist, wobei das System (200) mit geregelter Atmosphäre eine Stickstofftrennmembran (220) enthält, wobei das Belüften ein Umgehen der Stickstofftrennmembran (220) beinhaltet, wodurch eine Sauerstoffkonzentration im Innenraum der Transporteinheit (100) erhöht wird.

2. Verfahren gemäß Anspruch 1, wobei das Bestimmen der Kohlendioxidkonzentration das Bestimmen einer Sensorablesung (170) aus einem im Innenraum (105) der Transporteinheit (100) angeordneten Sensor (170) beinhalten.

3. Verfahren gemäß Anspruch 1, wobei das Aktivieren des Kohlendioxidinjektionssystems (140) das Positionieren einer Flusssteuerungsvorrichtung (160) aufweist, sodass ein Fluss aus einer Kohlendioxidquelle (150) zum Innenraum (105) der Transporteinheit (100) ermöglicht wird.

4. Verfahren gemäß Anspruch 3, wobei das Deaktivieren des Kohlendioxidinjektionssystems (140) das Positionieren der Flusssteuerungsvorrichtung (160) beinhaltet, sodass der Fluss aus der Kohlendioxidquelle (150) zum Innenraum (105) der Transporteinheit (100) deaktiviert wird.

5. Verfahren gemäß Anspruch 1, ferner umfassend:
Aktivieren des Kohlendioxidinjektionssystems (140), wenn die Kohlendioxidkonzentration unterhalb eines Schwellenbereichs basierend auf dem Sollwert liegt.

6. Transporteinheit (100), umfassend:
eine Transportkühleinheit;
einen Innenraum (105); und
ein Kohlendioxidinjektionssystem (140), wobei das Kohlendioxidinjektionssystem (140) zum Steuern einer Kohlendioxidkonzentration im Innenraum (105) der Transporteinheit (100) während des Transports vorgesehen ist, wobei das System beinhaltet:
eine Kohlendioxidquelle (150), die ein System mit geregelter Atmosphäre (200) enthält, wobei das System mit geregelter Atmosphäre (200) eine Stickstofftrennmembran (220) enthält;
eine Drucksteuerungsvorrichtung (155);
eine Flusssteuerungsvorrichtung (160), wobei die Kohlendioxidquelle (150), die Drucksteuerungsvorrichtung (155) und die Flusssteuerungsvorrichtung (160) strömungstechnisch mit dem Innenraum (105) der Transporteinheit (100) verbunden sind und in Fluidkommunikation stehen; und
eine Steuerungsvorrichtung (165), die dazu ausgelegt ist, den Fluss aus der Kohlendioxidquelle (150) zum Innenraum (105) der Transporteinheit (100) selektiv zu aktivieren und/oder zu deaktivieren,
**dadurch gekennzeichnet, dass** das System (200) mit geregelter Atmosphäre eine Umgehungsleitung (270) umfasst und wobei die Steuerungsvorrichtung (165) dazu ausgelegt ist, den Innenraum (105) zu belüften, um eine Kohlendioxidkonzentration durch Aktivieren des Systems (200) mit geregelter Atmosphäre zu verringern, wenn die Kohlendioxidkonzentration größer als ein auf einem Sollwert basierender Schwellenbereich ist, einschließlich Aktivieren eines Flusses zur Umgehungsleitung (270) und Umgehen der Stickstofftrennmembran (220), wodurch eine Sauerstoffkonzentration im Innenraum (105) der Transporteinheit (100) erhöht wird.

7. Transporteinheit (100) gemäß Anspruch 6, wobei der Innenraum (105) der Transporteinheit (100) einen Sensor (170) enthält, der dazu ausgelegt ist, eine Kohlendioxidkonzentration im Innenraum (105) zu bestimmen.

8. Transporteinheit (100) gemäß Anspruch 6, wobei die Transporteinheit (100) ein Container auf einem Flachwagen, ein intermodaler Container, ein Lastwagen oder ein Kastenwagen ist.

## Revendications

1. Procédé de commande d'une concentration de dioxyde de carbone dans un espace intérieur (105) d'une unité de transport (100), le procédé comprenant :
la détermination de la concentration de dioxyde de carbone dans l'espace intérieur (105) ;
l'activation d'un système d'injection de dioxyde de carbone (140) lorsque la concentration de dioxyde de carbone n'est pas au niveau d'une valeur de point de consigne ;
la désactivation du système d'injection de dioxyde de carbone (140) lorsque la concentration de dioxyde de carbone est au niveau de la valeur de point de consigne ; **caractérisé par** :
la ventilation de l'espace intérieur (105) pour diminuer la concentration de dioxyde de carbone en activant un système à atmosphère régulée (200) lorsque la concentration de dioxyde de carbone est supérieure à une plage seuil sur la base de la valeur de point de consigne, le système à atmosphère régulée (200) comprenant une membrane de séparation d'azote (220), la ventilation comprenant le contournement de la membrane de séparation d'azote (220), augmentant ainsi une concentration d'oxygène dans l'espace intérieur de l'unité de transport (100).

2. Procédé selon la revendication 1, la détermination de la concentration de dioxyde de carbone comprenant la détermination d'une lecture de capteur (170) à partir d'un capteur (170) disposé dans l'espace intérieur (105) de l'unité de transport (100).

3. Procédé selon la revendication 1, l'activation du système d'injection de dioxyde de carbone (140) comprenant le positionnement d'un dispositif de régulation d'écoulement (160) de telle sorte que l'écoulement d'une source de dioxyde de carbone (150) vers l'espace intérieur (105) de l'unité de transport (100) est activé.

4. Procédé selon la revendication 3, la désactivation du système d'injection de dioxyde de carbone (140) comprenant le positionnement du dispositif de régulation d'écoulement (160) de telle sorte que l'écoulement de la source de dioxyde de carbone (150) vers l'espace intérieur (105) de l'unité de transport (100) est désactivé.

5. Procédé selon la revendication 1, comprenant en outre :
l'activation du système d'injection de dioxyde de carbone (140) lorsque la concentration de dioxyde de carbone est inférieure à une plage seuil sur la base de la valeur de point de consigne.

6. Unité de transport (100), comprenant :
une unité de réfrigération de transport ;
un espace intérieur (105) ; et
un système d'injection de dioxyde de carbone (140), le système d'injection de dioxyde de carbone (140) permettant de réguler une concentration de dioxyde de carbone dans l'espace intérieur (105) de l'unité de transport (100) pendant le transport, le système comprenant :
une source de dioxyde de carbone (150) comprenant un système à atmosphère régulée (200), le système à atmosphère régulée (200) comprenant une membrane de séparation d'azote (220) ;
un dispositif de régulation de pression (155) ;
un dispositif de régulation d'écoulement (160), la source de dioxyde de carbone (150), le dispositif de régulation de pression (155) et le dispositif de régulation d'écoulement (160) étant en liaison fluidique et en communication fluidique avec l'espace intérieur (105) de l'unité de transport (100) ; et
un dispositif de régulation (165) configuré pour activer et/ou désactiver de manière sélective l'écoulement depuis la source de dioxyde de carbone (150) vers l'espace intérieur (105) de l'unité de transport (100), **caractérisé en ce que** le système à atmosphère régulée (200) comprend une conduite de dérivation (270) et
le dispositif de régulation (165) étant configuré pour ventiler l'espace intérieur (105) afin de diminuer une concentration de dioxyde de carbone en activant le système à atmosphère régulée (200) lorsque la concentration de dioxyde de carbone est supérieure à une plage seuil sur la base d'une valeur de point de consigne, comprenant l'activation de l'écoulement vers la conduite de dérivation (270) et le contournement de la membrane de séparation d'azote (220), augmentant ainsi une concentration d'oxygène dans l'espace intérieur (105) de l'unité de transport (100).

7. Unité de transport (100) selon la revendication 6, l'espace intérieur (105) de l'unité de transport (100) comprenant un capteur (170) configuré pour déterminer une concentration de dioxyde de carbone dans l'espace intérieur (105).

8. Unité de transport (100) selon la revendication 6, l'unité de transport (100) étant l'un des éléments parmi un conteneur sur un wagon plat, un conteneur intermodal, un camion ou un wagon couvert.
